(19) Europäisches Patentamt
European Patent Office
Office européen des brevets

(11) **EP 1 868 327 A2**

(12) **EUROPEAN PATENT APPLICATION**

(43) Date of publication:
**19.12.2007 Bulletin 2007/51**

(51) Int Cl.:
*H04L 12/28* (2006.01)   *H04L 12/56* (2006.01)
*H04L 29/06* (2006.01)

(21) Application number: **07117708.3**

(22) Date of filing: **06.10.2004**

(84) Designated Contracting States:
**DE FR GB IT**

(30) Priority: **10.10.2003 US 510200 P**

(62) Document number(s) of the earlier application(s) in accordance with Art. 76 EPC:
**04794340.2 / 1 687 940**

(71) Applicant: **Thomson Licensing**
**92100 Boulogne-Billancourt (FR)**
Designated Contracting States:
**DE FR GB IT**

(72) Inventors:
• **BICHOT, Guillaume**
**35630, LA CHAPELLE CHAUSSEE (FR)**

• **VERMA, SHAILY**
**400076, POWAI, MUMBAI (IN)**
• **KOSTIC, ZORAN**
**HOLMDEL, NJ MOMMOUTH, NJ 08852 (US)**

(74) Representative: **Deschamps, Samuel Thomson**
**46, quai Alphonse Le Gallo**
**F-92648 Boulogne Cedex (FR)**

Remarks:
This application was filed on 02 - 10 - 2007 as a divisional application to the application mentioned under INID code 62.

(54) **Controlling bandwidth allocation of data packets**

(57)    A method for controlling bandwidth allocation of first and second data packet types in a single rate network by determining, by a device, a throughput rate of the first data packet type in the network and reducing, by the device, the throughput rate of the first data packet type when the throughput rate reaches a predetermined level is described. A method for controlling bandwidth allocation of each of a plurality of data packet categories in a multi-rate network by determining, by a device, a throughput rate of one of a plurality of data packet categories/classes (the $j^{th}$ data packet category) and reducing the throughput rate of the $j^{th}$ data packet category when the throughput rate reaches a predetermined level, wherein a maximum bit rate of a data packet category is based on a distance between members of the data packet category and the device and wherein said $j^{th}$ data packet category transmits TCP packets, is described.

```
                    ┌─────────┐
                    │  START  │
                    └─────────┘
                         │
                         ▼
┌──────────────────────────────────────────────┐
│ DETERMINE A THROUGHPUT RATE FOR A FIRST DATA   │─── 505
│                 PACKET TYPE                     │
└──────────────────────────────────────────────┘
                         │
                         ▼
┌──────────────────────────────────────────────┐
│ REDUCE THE THROUGHPUT RATE OF THE FIRST DATA   │─── 510
│ PACKET TYPE WHEN THE THROUGHPUT RATE REACHES   │
│           A PREDETERMINED LEVEL                 │
└──────────────────────────────────────────────┘
                         │
                         ▼
                    ┌─────────┐
                    │   END   │      *FIG. 5A*
                    └─────────┘
```

**Description**

FIELD OF THE INVENTION

The present invention relates generally to network communications and, in particular, to a method and apparatus for bandwidth reservation. The invention is particularly suitable for implementation in a wireless Local Area Network (WLAN) system operating in accordance with the Institute of Electrical & Electronics Engineers' (IEEE) 802.11 standards.

BACKGROUND OF THE INVENTION

Conventionally, the IEEE 802.11 based architecture is comprised of several components and services that interact to provide station mobility transparent to the higher layers of the network stack. The IEEE 802.11 based network defines a station as the component that connects to a wireless medium and contains the functionality of the IEEE 802.11 protocols, that being MAC (Medium Access Control), PHY (Physical Layer), and a connection to the wireless media. Typically, the IEEE 802.11 protocols are implemented in the hardware and/or software of a network interface card.

A station could be a laptop PC, handheld device, or an access point (AP). Stations may be mobile, portable, or stationary and all stations support the IEEE 802.11 station services of authentication, de-authentication, privacy, and data delivery.

The MAC layer's primary function is to provide a fair mechanism to control access of shared wireless media. However, prior to transmitting a frame, the MAC layer must gain access to the network, which it does through two different access mechanisms: a contention-based mechanism, called the distributed coordination function (DCF), and a centrally controlled access mechanism, called the point coordination function (PCF).

The PCF modes allow the implementation of a quality of service (QoS) mechanism, but it is optional and requires extra interactions in order to negotiate a QoS between the mobile terminal and the ID. The DCF mode, considered the default mode, does not provide any QoS mechanism. Consequently all stations, including the base station ID, in a WLAN have the same probability to acquire and to send data within the medium. This type of service is referred to as a "best effort".

Three interframe space (IFS) intervals defer an IEEE 802.11 station's access to the medium and provide various levels of priority. Each interval defines the duration between the end of the last symbol of the previous frame to the beginning of the first symbol of the next frame. The Short Interframe Space (SIFS) provides the highest priority level by allowing some frames to access the medium before others, such as an ACK frame, a Clear-to-Send (CTS) frame, or a fragment of a previous data frame.

Simultaneous transmit attempts lead to collisions in the downlink, since only one transport stream can be transmitted during any one period. The problem is particularly acute during periods of high traffic loads and may render the protocol unstable. The IEEE 802.11 MAC layer uses collision avoidance rather than collision detection in order to simultaneously transmit and receive data. To resolve collisions, subsequent transmission attempts are typically staggered randomly in time using a binary exponential backoff. The DCF uses physical and virtual carrier sense mechanisms (carrier sense multiple access with collision avoidance (CSMA/CA)) with a binary exponential backoff that allows access attempts after sensing the channel for activity.

If the broadcast or multicast originator is a mobile terminal, broadcast or multicast data are first transferred from the mobile terminal to the ID in a unicast transmission. According to the IEEE 802.11 specifications, the broadcast/ multicast message may be distributed into the BSS by the ID. Regardless of the length of the frame, no RTS/CTS exchange can be used. In addition, no acknowledgement (ACK) is permitted to be transmitted to the ID by any of the recipients of the multicast/broadcast frame(s). There is no MAC-level recovery on broadcast or multicast frames sent from the ID.

When several devices share the same medium, there is a need for a mechanism in order to arbitrate acquisition of the medium. This mechanism is conventionally implemented in the MAC (Medium Access Control) layer. When the mechanism is distributed (i.e. there is no central controller) there is no possibility of QOS. The service offered to the upper protocol layers is said to be "best effort". However, there is a need to provide some quality of service using some mechanism implemented in upper layers like network (IP) or transport (TCP/UDP). In order to cope with legacy devices, the mechanism should not impact the end devices (terminal or server). It should then be implemented in an intermediate device like an AP or a bridge, where bridge and/or AP are used herein to include router and/or brouter or any device having equivalent functionality. There is a mechanism at the IP layer like Diffserv that stores all incoming packets into the different queues according to the Diffserv class to which the packet belongs. The queues are emptied according to an algorithm that prioritizes the packets belonging to the queue associated with the highest-class number or some other predetermined algorithm /method.

The problem with such a mechanism is that it introduces packet dropping and packet re-transmissions. In a network, e.g., WLAN environment, a mechanism that avoids packet dropping is needed.

SUMMARY OF THE INVENTION

The context of the present invention is the family of wireless local area networks or WLANs based upon the IEEE 802.11 standards, which define intermediate devices (IDs) such as access points (APs), bridges, routers and brouters that provide access for mobile devices and to other networks, such as hard-wired local area and global networks, such as the Internet. Wireless receiving points utilized in access broadcast video streaming may include a set top box in a simple system, whereas in commercial rebroadcast system a transcoder/multiplexer/demultiplexer or TMD may operate in conjunction with a local video server. In receiving Internet data, a common gateway operating in a conventional Internet Protocol/Transmission Control Protocol/User Datagram Protocol (IP/TCP/UDP) protocol may be utilized.

When no Quality of Service (QOS) mechanism is provided, in a best effort environment, the invention proposes a mechanism at the transport level (TCP/UDP) that provides a bandwidth reservation mechanism for UDP traffic by slowing down the TCP traffic. Moreover the invention deals with the near/far problem typical in a WLAN environment.

Based on the assumption that UDP traffic is typically used for video, the present invention describes a mechanism that deals with the TCP packets. In order to prioritize the UDP traffic (that is typically used for video) the intermediate device (the AP, for example) measures the TCP traffic and when the throughput passes a certain threshold, it slows down the TCP traffic by slowing down the TCP ACK packets.

It is known in the art, how to enhance the TCP efficiency in a WLAN environment. However, no one teaches controlling the TCP traffic in order to limit the throughput rate in a WLAN intermediate device (ID) for bandwidth reservation purposes.

The present invention describes a method for implementing a bandwidth reservation mechanism in an ID at a higher level/layer in order to ensure a certain minimum bandwidth (and, therefore, QoS), for a certain type or class/category of data packets.

The present invention relates to the DCF mode, maintaining compatibility with the current ID standard for bandwidth allocation in the downlink, and thus, prioritizes a video broadcast or multicast downlink stream. The methods described herein, however, may be used in the uplink or both the uplink and the downlink.

A system and method for controlling bandwidth allocation of first and second data packet types in a single rate and multi-rate network by determining, by a device, a throughput rate of the first data packet type in the network and reducing, by the throughput rate of the first data packet type when the throughput rate reaches a predetermined level, thereby guaranteeing a minimum bandwidth for the second data packet type, are described. Additionally, a comparison is made against a lower threshold and a determination is made if the throughput rate reduction should be continued or if the throughput rate should be raised. The device is typically an intermediate device, which may be, for example, an access point (AP), a bridge, a router or a brouter.

The mechanism of the present invention, thus, provides a method to reserve bandwidth for a certain traffic category/class without impacting the end devices (terminal, server). The mechanism is particularly suitable for WLAN environments and when UDP traffic (video broadcast for instance) has to take priority over other traffic.

The mechanism of the present invention can also handle the WLAN near/far problem. The near/far problem exists when an adaptive (or dynamic) link adaptation mechanism is part of the wireless communication. The physical mode (modulation and error correction scheme) may change at any moment depending of the quality of the radio signal. One consequence is that the maximum bit rate is lower at the edges of the cell (far) and higher closer to the intermediate device (near). The UDP traffic is assumed to be broadcast/multicast (e.g., video multicast). That means a certain maximum range is established as a target because the combination of bit rate and error rate beyond that range makes multicast infeasible. For example, the target might be 100 meters. The intermediate devices are configured such that the physical coding mode (coding plus modulation) corresponds to a maximum bit rate of 5.5 Mbps for transmitting UDP packets. There must be sufficient bandwidth for the UDP traffic/data packets according to a user configured maximum bandwidth. Each new TCP session results in a re-calculation of the TCP packet throughput rate in accordance with UDP traffic/data packet requirements.

For example, assume that all UDP traffic/data packets are targeted for 100 meters. That is, the UDP traffic/data packets are all being multicast/broadcast to members of the data packet category/class 100 meters ($\pm$ delta) from the intermediate device. At 100 meters, the maximum bit rate for the physical coding mode is 5.5 Mbps. This controls both the number of TCP sessions and the distance of the TCP sessions from the intermediate device because the distance from the intermediate device dictates the maximum bit rate. Since TCP sessions and the attendant transmission of TCP data packets is constantly changing in a network and even more particularly in a WLAN because it is assumed that the user device is a mobile terminal/mobile device (MT/MD), the predetermined upper and lower thresholds are constantly being re-calculated. That is, while the upper and lower threshold may be static it is more likely that they are dynamic.

BRIEF DESCRIPTION OF THE DRAWINGS

The invention is best understood with reference to the Detailed Description of the Preferred Embodiments and the drawings where:

FIG. 1 illustrates an exemplary digital video and audio system suitable for implementing the present invention;
FIG. 2 is a block diagram of the present invention;
FIG. 3 is a graph illustrating the upper and lower thresholds for TCP acks used in the present invention;
FIG. 4 is a block diagram of an exemplary system in which the present invention may be implemented; and
FIGs. 5A and 5B are flowcharts illustrating the methods of the embodiments of the present invention.

DETAILED DESCRIPTION OF THE PREFERRED EMBODIMENTS

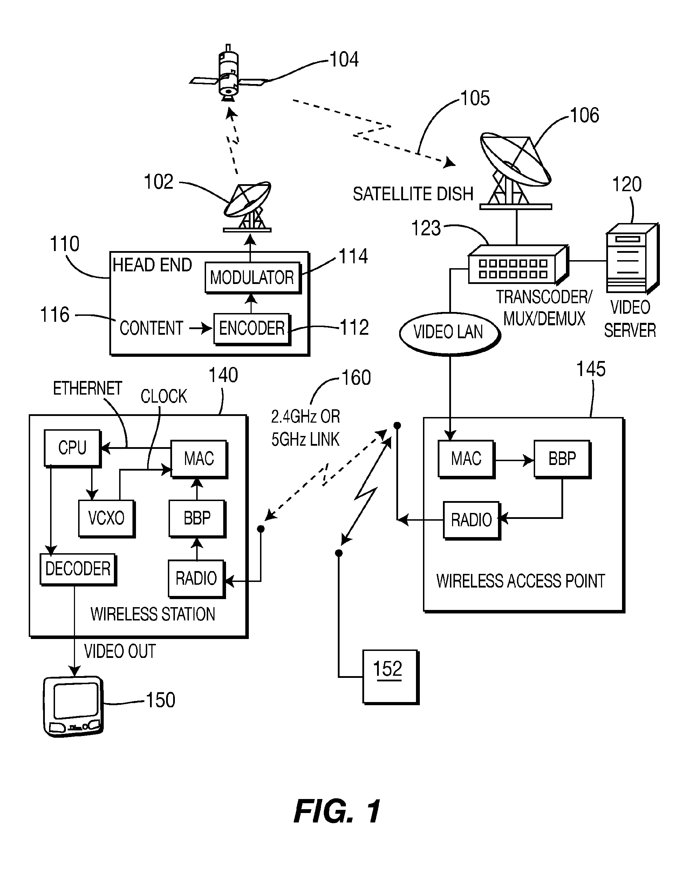

FIG. 1 illustrates an exemplary digital video and audio system suitable for implementing the present invention. At the head end a multiple video and audio content stream is converted into a digital format (typically in accordance with the MPEG-2 standard) and transmitted via, for example, satellite to a receiving dish, or other suitable means, which is attached to a receiver referred to as a set top box or other suitable means such as a TMD. U.S. Patent No. 6,510,519, describes a representative system utilizing a head end and a set top box including tuners, demodulators, decoders, transport de-multiplexers, microprocessors, program memories, video picture memories, MPEG video decoders, displays, and smart cards. Most digital broadcast system data streams are encoded and scrambled for security purposes at a transmitter; once decryption and decoding occur at a receiver, the system builds a video composite picture in memory and displays the desired picture synchronized with its audio component on a monitor. In addition to descrambling the program, generally, further authorizations are provided to insure that the particular receiver has been enabled to receive a program or a set of programs.

As further illustrated in FIG. 1, the TMD operating in conjunction with a local video server may be designed and configured to further communicate with a video LAN and a wireless AP, which in the illustrative example provides down line receivers with demultiplexed video and audio transmission streams including synchronized signals necessary for the transmission of the video and audio content.

The method described herein teaches controlling the bandwidth allocation in a shared medium (network) that may be a WLAN. The mechanism segregates TCP and UDP traffic and reserves bandwidth for UDP traffic. The mechanism also works in the case where only TCP traffic exists. In that case, the mechanism functions to reserve bandwidth for a particular class/category of traffic (data packets).

In a first embodiment, the maximum bandwidth offered by the medium is fixed. For example, the bandwidth can be a 10 Mbit/s Ethernet segment or a WLAN network with a short coverage in such a way that the coding and modulation cannot vary. The physical coding mode is forced to always be the same. Consequently, the maximum coverage is always the same. The second embodiment, deals with the particular case of the network (e.g., WLAN) technology where the maximum bit rate may vary as a function of the position of the user terminal, e.g., the network may be a WLAN and the user may be using a mobile terminal/mobile device (MT/MD). Any network where the maximum bit rate varies as a function of the position (distance) of the user terminal from an ID in the network qualifies as an exemplary network for purposes of discussion for the second or alternative embodiment of the present invention.

The method comprises segregating the traffic going through the base station (or AP) into two types of data packets (TCP and UDP) and reserving some bandwidth for the UDP traffic in such a way that whatever the TCP traffic is, there will be sufficient bandwidth for the UDP traffic. The mechanism of the present invention can be applied in one direction only (i.e. either uplink or downlink) or in both directions.

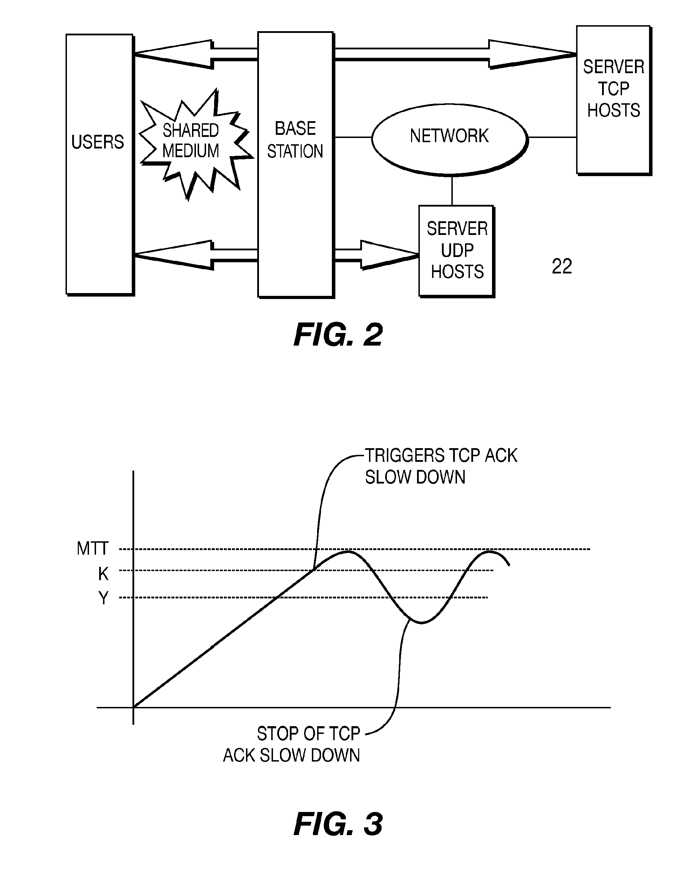

FIG. 2 is a block diagram of the present invention where the "Users" block represents all the users, e.g. MTs that are currently involved in communication. Some are involved in TCP sessions and others are involved in UDP transmissions.

In order to control the TCP traffic it is necessary to measure the TCP throughput (TT) that crosses the base station and compare it with the Maximum TCP Throughput (MTT) that will be permitted.

The TCP throughput is the sum of Nt individual TCP session throughputs TTi and is measured continuously.

$$1. \ TT = \sum_{i=1}^{Nt} TTi$$

The MTT is the Maximum Possible throughput (MPT) that can be expected from the radio interface minus the Maximum UDP Throughput (MUT) needed to be provisioned. The MUT may be a fixed value, which would mean that resources would be provisioned based on the real need. Alternatively, the MUT may be the current UDP traffic throughput (UT) with a Maximum Configured UDP traffic (MCUT) value that it cannot exceed.

$$2. \ MTT = MPT - MUT$$

$$3. \ If \ UT < MCUT \ then \ MUT = UT \ else \ MUT = MCUT$$

If TT becomes greater than MTT the mechanism limits the TCP traffic by slowing the TCP acknowledgements down. All received TCP ACK are then systematically slowed down until the TT drops below a certain predetermined threshold. The time (ST) required to slow down the TCP traffic is computed as follows:

$$4. \ ST = (TT - MTT) / TT$$

The overall time ST is then distributed proportionally among TCP packets. For each individual TCP packet, the corresponding TCP ACK will be slowed down according to its packet size (Sp), where STp is the slow down time per packet:

$$5. \ STp = (Sp / TT) * ST$$

There may be other methods to distribute the overall time ST among TCP packets such as using an equal distribution algorithm, where the ST is divided by the number of TCP sessions. For each session i, the ACK is slowed down according to the corresponding ST (STi). This method is not fair but advantaging the TCP sessions that have a big throughput is an alternative. In this method STi is the overall slow down time per session, STpi is the slow down time per packet per session and SPi is the packet size per session.

$$6.1 \ STi = ST / Nt$$

$$6.2 \ STpi = (Spi / TTi) * STi$$

Once the slowing down begins, there is an expected inertia due to the TCP congestion mechanism that smoothes the RTT (Round Trip Timeout) in order to cope with lost packets (i.e. a lost packet does not cause the RTT to increase accordingly). Thus, the threshold for starting to limit the TCP throughput should be smaller than the MTT. Consider **K** as the high threshold that triggers the TCP ACK slow down mechanism. **K** is dependent on **MTT**.

When a new TCP session starts, some time is required to compute the effects on the TCP throughput (TT). It is also important to consider the resolution of the RTT in the TCP server. This means that if the TCP ACK is slowed down for a very short period, it is likely the TCP server will not react (the RTT will not be updated). Therefore, **Y** is chosen as the low threshold value (lower bound) that stops the TCP ACK slow down.

$$7.1 \ Y < K \ with \ K \ and \ Y = f(MTT)$$

Then Equation 4 becomes:

$$7.2 . ST = (TT - Y) / TT$$

FIG. 3 is a graph illustrating $Y$ and $K$ and the delay in slowing down the TCP acks upon exceeding each $Y$ and $K$. It should be noted that the throughput rate reductions and increases are both delayed by a roughly equivalent amount.

In the second or alternative embodiment of the present invention, also called the multi-bit rate network embodiment, in networks, such as the WLAN IEEE 802.11 or ETSI Hiperlan2, the overall available bit rate at the radio interface depends on the distance between the user (e.g., MT) and a point of access into the network (e.g., AP). According to this distance, the physical layer (PHY) applies different error correction mechanisms as well as different modulation schemes. For instance, according to the IEEE 802.11b specification the AP coverage is 400m at 1Mbit/s, 170m at 2 Mbit/s, 100m at 5.5 Mbit/s and 50m at 11 Mbit/s. The user, e.g. MT is assumed to be mobile and thus the control of the bit rate used by the TCP traffic depends on the location of the users (the distance of the user (MT) from an AP).

It is assumed that the downlink UDP traffic is forwarded by the ID using the same constant bit-rate, for example 5.5 Mbit/s (the access point forces the physical mode for each of those downlink UDP packet). It is also assumed that there is already a mechanism in the radio interface in order to trigger the change of the modulation/error correction scheme according to a measurement such as SNR (Signal/Noise ratio) for TCP packets.

The TCP sessions that are established between the ID and the user terminals consume the bandwidth as a function of the distance between the ID and the user terminal and thus as a function of the physical coding (modulation). In order to apply the rules and equations as detailed in the previous embodiment, it is necessary to convert the throughput linked with a TCP session taking into account the physical mode used with that session. As an example, assume the UDP traffic is forwarded using the 5.5 Mbps physical mode. Any TCP session throughput computation is then converted according to the 5.5 Mbps mode. For instance, a mobile device located far from the access point (ID) required the physical mode associated with the 1 Mbps bit rate. The mobile device is involved in a TCP session consuming 500 Kbps. After conversion (500 Kbps with a 1 Mbps bit rate requires 0.5 seconds) the TCP session associated with the mobile device consumes 2.75 Mbps taking into account the 5.5 Mps physical mode bit-rate. The TTi as required by the equation *1*, is computed as follows.

$$8.1 \ TTi = UPM * TTRi/TPMi$$

with UPM being the UDP physical mode bit rate as 5.5 Mbps in the example above, TTRi being the real TCP throughput (500 Kbps in the example above) measured with the physical mode currently used associated with the maximum bit rate TPMi (1 Mbps in the example above). Of course, after computing equation 5, the symmetric conversion is required in order to compute the time the packet has to be slowed down according to the physical mode linked with the corresponding TCP session. The real slow down time for each TCP packet (RSTp) is then computed as follows:

$$8.2 \ RSTp = STp* TPMi /UPM$$

with STp being computed using equation 5, UPM being the UDP physical mode bit rate (5.5 Mbps in the example above) and TPMi the maximum bit rate associated with the physical mode currently used by TCP session i associated with the TCP packet (1 Mbps in the example above).

The mechanism can be adapted to support a layer-3 mechanism such as Diffserv. Diffserv is a mechanism that permits the application of different levels of quality of service (QoS) according to a stream class. Basically, each data packet is marked by an ingress router/bridge/brouter at the edge of the Diffserv domain. The ingress router/bridge/brouter sets a dedicated field of the IP packet header called type of service (ToS) to IPV4. The value is chosen according to configuration rules, for example, all packets with a particular source address will get the same ToS. When a marked IP packet crosses a router/bridge/brouter within the Diffserv domain, the router/bridge/brouter applies a forwarding behavior according to the ToS field. The behavior is related to scheduling, queueing and/or policing. Each Diffserv class may correspond to a class/category of segregated TCP traffic. It is assumed then that Diffserv traffic (data packets) is only TCP.

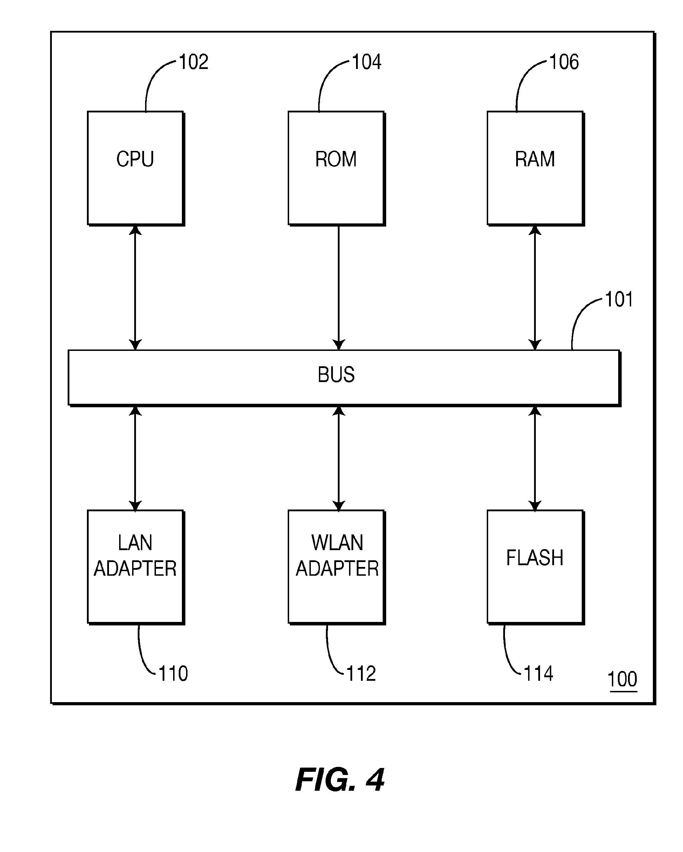

FIG. 4 is a block diagram illustrating a computer system 100 to which the present invention may be applied, according to an illustrative embodiment of the present invention. The computer processing system 100 may be embodied in a intermediate device (ID) used to interconnect a Wireless LAN (WLAN) with a wired LAN network. The computer processing system 100 of, for example, a WLANaccess point, includes at least one processor (CPU) 102 operatively coupled to other components via a system bus 101. A read only memory (ROM) 104, a random access memory (RAM) 106, a an electrically programmable read only memory (FLASH) 114and at least two network adapters 110 and 112 to interconnect respectively the wired network with the wireless network.. Network adapter 110 is a LAN adapter (Ethernet, for example) adapter and network adapter 112 is a WLAN adapter (IEEE 802.11 for example).

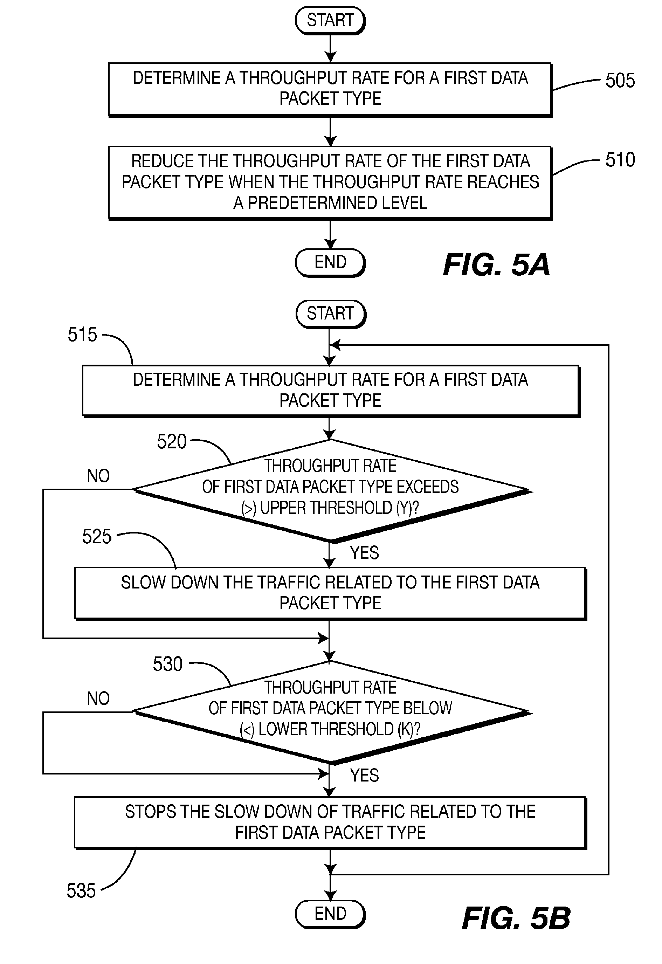

FIGs. 5A and 5B are flowcharts illustrating exemplary embodiments of the present invention. Referring first to FIG. 5A, in a single rate network, an intermediate device, such as an access point (AP), a bridge, a router, a brouter, or any equivalent device, determines the throughput rate relative to a first data packet type. A TCP session is detected by the ID (e.g., AP) through examination of IP packet payload. Dedicated packet types exist that are used to open a TCP session. To determine the mean throughput relative to the TCP packet type, the ID computes the number of TCP payload bytes that crosses the ID within a certain time period. The ID continuously sums the mean throughput of each existing TCP session. The intermediate device then reduces the throughput rate of all TCP packets belonging to all existing TCP sessions by slowing down the TCP acknowledgements sent back by receiver terminal. This throughput rate reduction guarantees that sufficient bandwidth will be available for a second data packet type as UDP packets.

Referring next to FIG. 5B, which also assumes a single rate network, an intermediate device determines the throughput rate of a first data packet type at 515. The throughput rate determined by the intermediate device is evaluated against a predetermined upper threshold at 520. If the throughput rate exceeds the upper threshold Y then the intermediate device slows down the traffic related to the first data packet type at 525. The intermediate device continually monitors the throughput rate and at 530 compares the throughput rate against a lower threshold K. If the throughput rate is below the lower threshold then the intermediate device stops slowing down the traffic related to the first data packet type at 535. This raising of the throughput rate may or may not be back to the pre-reduction rate. After the throughput rate is raised then the process is re-started with a determination of the throughput rate to see that it has not exceeded the upper threshold.

It is to be understood that the present invention may be implemented in hardware, software or firmware or any combination thereof. It is to be further understood that, because some of the constituent system components and method steps depicted in the accompanying figures may be implemented in software, the actual connections between the system components (or the process steps) may differ depending upon the manner in which the present invention is programmed. Given the teachings herein, one of ordinary skill in the related art will be able to contemplate these and similar implementations or configurations of the present invention.

It is to be understood that the form of this invention as shown is merely a preferred embodiment. Various changes may be made in the function and arrangement of parts; equivalent means may be substituted for those illustrated and described; and certain features may be used independently from others without departing from the spirit and scope of the invention as defined in the following claims. For example, although the invention is described in the context of IEEE 802.11 based WLANs, it is to be understood that the invention may be applied to structures based on other wireless LAN standards wherein the synchronization is to be maintained.

**Claims**

1. A method for controlling bandwidth allocation of transmission control protocol data packet types and second data packet types in a network, the method comprising:

   determining, by an intermediate device, a throughput rate of at least one of said transmission control protocol data packet types in said network; and
   reducing, by said intermediate device, said throughput rate of said at least one of said transmission control protocol data packet types through said network when said throughput rate reaches a predetermined level, wherein said network is a multi-bit rate network wherein a maximum bit rate of each of said data packet types is based on a distance between a user device employing each of said data packet types and said intermediate device.

2. The method according to claim 1, wherein said second data packet types multicasts user datagram protocol UDP packets at a fixed rate and remaining data packet types are transmission control protocol TCP packets.

3. The method according to claim 1, wherein said transmission control protocol data packet types are transmission control protocol TCP packets at a fixed rate and remaining data packet types are transmission control protocol TCP packets.

4. The method according to claim 2, wherein the act of reducing comprises reducing a rate at which acknowledgement ACK packets for one of said remaining data packet types are transmitted.

5. The method according to claim 1, wherein said network is a wireless local area network WLAN.

6. The method according to claim 1, wherein said intermediate device is one of an access point, a router, a bridge and a brouter.

7. The method according to claim 1, wherein said network is any wireless medium that offers dynamic link adaptation.

8. The method according to claim 2, wherein said intermediate device determines said throughput rate of each of said remaining data packet types by taking into account said maximum bit rate of each of said remaining data packet types and summing said throughput rate of each of said remaining data packet types.

9. The method according to claim 2, further comprising comparing the result of said act of determining to an upper threshold for one of said remaining data packet types.

10. The method according to claim 9, further comprising comparing said throughput rate of one of said remaining data packet types to a lower threshold and based on a result of said comparison performing one of continuing said throughput rate reduction for said one of said remaining data packet types and stopping said throughput rate reduction of said one of said remaining data packet types.

11. A system for controlling bandwidth allocation of a transmission control protocol and second data packet types in a network, comprising:

a first device for transmitting data over said network; and
a plurality of second devices for receiving data via one of said data packet types, wherein said first device determines a throughput rate of said transmission control protocol data packet types in said network and wherein said first device reduces said throughput rate of one of said data packet types through said network when said throughput rate reaches a predetermined level, and wherein said network is a multi-bit rate network wherein a maximum bit rate of each of said data packet types is based on a distance between said second device employing each of said data packet types and said first device.

12. The system according to claim 11, wherein one of said data packet types multicasts user datagram protocol UDP packets at a fixed rate and remaining data packet types are transmission control protocol TCP packets.

13. The system according to claim 11, wherein one of said plurality of data packet types is transmission control protocol TCP packets at a fixed rate and remaining data packet types are transmission control protocol TCP packets.

14. The system according to claim 12, wherein said reduction comprises reducing a rate at which acknowledgement ACK packets for said one of said remaining data packet types.

15. The system according to claim 11, wherein said network is a wireless local area network WLAN.

16. The system according to claim 11, wherein said network is any wireless medium that offers dynamic link adaptation.

17. The system according to claim 11, wherein said first device is an access point AP.

18. The system according to claim 11, further comprising a comparison of a result of said throughput rate determination of said one of said remaining data packet types to an upper threshold for said one of said remaining data packet types.

19. The system according to claim 11, further comprising a post-reduction comparison of said throughput rate of said one of said remaining data packet types to a lower threshold and based on a result of said post-reduction comparison performing one of continuing said throughput reduction rate for said one of said remaining data packet types and stopping said throughput rate reduction of said one of said remaining data packet types.

20. A system for controlling bandwidth allocation of a plurality of data packet types in a network, comprising:

means for determining, by an intermediate device, a throughput rate of one of said plurality of said data packet types in said network; and
means for reducing, by said intermediate device, said throughput rate of said one of said plurality of said data packet types through said network when said throughput rate of said one of said plurality of said data packets types reaches a predetermined level.

21. The system according to claim 20, wherein said network is a multi-bit rate network wherein a maximum bit rate of each of said data packet types is based on a distance between a user device employing said data packet types and said intermediate device.

22. The system according to claim 20 wherein said means for determining further comprises a device for transmitting first data packet types and second data packet types over said network, wherein said device determines a throughput rate of said first data packet types in said network and wherein said device reduces said throughput rate of said first data packet types through said network when said throughput rate reaches a predetermined level.

23. The system according to claim 20 wherein said one of said plurality of data packet types comprises transmission control protocol TCP data packets.

**FIG. 1**

**FIG. 2**

TRIGGERS TCP ACK SLOW DOWN

MTT
K
Y

STOP OF TCP ACK SLOW DOWN

**FIG. 3**

**FIG. 4**

START

DETERMINE A THROUGHPUT RATE FOR A FIRST DATA PACKET TYPE — 505

REDUCE THE THROUGHPUT RATE OF THE FIRST DATA PACKET TYPE WHEN THE THROUGHPUT RATE REACHES A PREDETERMINED LEVEL — 510

END

*FIG. 5A*

START

515 —

DETERMINE A THROUGHPUT RATE FOR A FIRST DATA PACKET TYPE

520 —

THROUGHPUT RATE OF FIRST DATA PACKET TYPE EXCEEDS (>) UPPER THRESHOLD (Y)?

NO

YES

525 —

SLOW DOWN THE TRAFFIC RELATED TO THE FIRST DATA PACKET TYPE

530 —

THROUGHPUT RATE OF FIRST DATA PACKET TYPE BELOW (<) LOWER THRESHOLD (K)?

NO

YES

STOPS THE SLOW DOWN OF TRAFFIC RELATED TO THE FIRST DATA PACKET TYPE

535 —

END

*FIG. 5B*

**EP 1 868 327 A2**

**REFERENCES CITED IN THE DESCRIPTION**

**Patent documents cited in the description**

- US 6510519 B